(19) Europäisches Patentamt
European Patent Office
Office européen des brevets

(11) Publication number: **0 436 136 A1**

# (12) EUROPEAN PATENT APPLICATION

(21) Application number: 90123278.5

(22) Date of filing: 05.12.90

(51) Int. Cl.5: C08K 5/00, C08L 71/12, C08L 77/00, //(C08K5/00,5:09, 5:49),(C08L71/12,77:00), (C08L77/00,71:12)

(30) Priority: 28.12.89 US 458189

(43) Date of publication of application: 10.07.91 Bulletin 91/28

(84) Designated Contracting States: DE ES FR GB IT NL

(71) Applicant: GENERAL ELECTRIC COMPANY
1 River Road
Schenectady, NY 12345(US)

(72) Inventor: Lee, Gim Fun, Jr.
11 Drawbridge Drive
Albany, New York 12203(US)

(74) Representative: Schüler, Horst, Dr. et al
Kaiserstrasse 69
W-6000 Frankfurt/Main 1(DE)

## (54) Compatibilized polyphenylene ehter resin/nylon resin blends containing aromatic phosphorous-containing compounds.

(57) Compatibilized blends of polyphenylene ether resin and polyamide resin containing aromatic phosphorous-containing compounds are disclosed wherein the compatibilizing agent is selected from polycarboxylic acids and functionalized polyphenylene ether resins. The compositions may be rendered flame retardant when the composition is comprised of a phosphorous-containing compound in an amount sufficient to confer flame retardancy thereto. Reinforced compositions are also disclosed.

EP 0 436 136 A1

# COMPATIBILIZED POLYPHENYLENE ETHER RESIN/NYLON RESIN BLENDS CONTAINING AROMATIC PHOSPHOROUS-CONTAINING COMPOUNDS

## FIELD OF THE INVENTION

The present invention relates to compatibilized blends of polyphenylene ether (PPE) and polyamide (PA) resins containing an aromatic phosphorous-containing compound. In alternative embodiments, the present invention relates to flame retardant, compatibilized polyphenylene ether (PPE)/polyamide (PA) blends wherein the aromatic phosphorous-containing compound is present in an amount sufficient to confer flame retardancy to the blends. The compatibilizier for the blends consists of a polycarboxylic acid or a functionalized polyphenylene ether, preferably wherein the polyphenylene ether comprises a class of compounds which are a reaction product of a polyphenylene ether polymer and a compound which contains in the molecule both (i) at least one acyl functional group and (ii) at least one group capable of reacting or associating with a polyamide resin.

## BACKGROUND OF THE INVENTION

The polyphenylene ether resins are characterized by a unique combination of chemical, physical and electrical properties over a temperature range of more than 650° F., extending from a brittle point of about -275° F. to a heat distortion temperature of about 375° F. This combination of properties renders the polyphenylene ether resins suitable for a broad range of applications. However, in spite of the afore-mentioned beneficial properties, the usefulness of the polyphenylene ether resins is limited in some applications as a consequence of processability, impact resistance and chemical resistance.

Finholt (U.S. Patent No. 3,379,792) discloses polymer blends wherein the processability of polyphenylene ether resins may be improved by blending with from 0.1 to 25% by weight of a polyamide. However, the advantages of the Finholt invention are limited by the fact that when the concentration of the polyamide exceeds 20% by weight, appreciable losses in other physical properties result. Specifically, there is no, or at best poor, compatibility between the polyphenylene ether and the polyamide such that phase separation of the resins occurs on molding or the molded article is inferior in mechanical properties. The reference does not mention flame retarding the blends.

Ueno et al. (U.S. Patent No. 4,315,086) disclose polyphenylene ether blends having improved chemical resistance without a loss of other mechanical properties by blending therewith a polyamide and a specific compound selected from the group consisting essentially of (A) liquid diene polymers, (B) epoxy compounds and (C) compounds having in the molecule both of (i) an ethylenic carbon-carbon double bond or carbon-carbon triple bond and (ii) a carboxylic acid, acid anhydride, acid amide, imide, carboxylic acid ester, amino or hydroxy group. The reference does not mention flame retarding the blends.

Maruyama et al. (U.S. Patent No. 4,338,421) disclose a process for melt blending 70% to 5% of a polyphenylene ether with 95% to 30% of a polyamide which is said to improve solvent resistance and impact strength. Flame retardants are mentioned as possible additives to the compositions, but no specific flame retardant is mentioned.

Kasahara et al. (U.S. Patent No. 4,339,376) disclose the use of a copolymer comprising units of a vinyl aromatic compound and either an alpha, beta-unsaturated dicarboxylic acid anhydride or an imide compound thereof as a modifier to an impact resistant polyphenylene ether/ polyamide blend for improved heat resistance and oil resistance. The reference mentions phosphoric acid esters, phosphorous acid esters and compounds containing heterocyclic units of phosphorous and oxygen as flame retardants.

Aycock et al. (U.S. Patent Nos. 4,600,741 and 4,642,358) disclose polyphenylene ether/polyamide resins in combination with a property-improving acyl-modified polyphenylene ether compatibilizing agent having improved compatibility, elongation and impact properties. The references mention the addition of flame retarding additives to the compositions, but do not specifically mention any flame retardant.

EPO published patent application number 115,218 discloses compositions comprised of polyphenylene ether, up to 25 parts by weight of a low molecular weight, non-polymeric diamide and optionally a styrene resin said to have improved processability. Phosphorous-containing flame retardants, including triphenyl phosphate, are mentioned as suitable in the claimed compositions.

EPO published patent application number 131,445 discloses compositions of a polyphenylene ether resin and a polyamide having a melting point of up to about 330° C. The reference discloses that phosphoric acid esters such as triphenyl phosphate may be used as flame retardant agents in the compositions, though none are exemplified.

PCT International publication number W085/05372 discloses polyphenylene ether resin/polyamide resin compositions comprising polyphenylene ether, polyamide and a polycarboxylic acid and the reaction product thereof which are said to have improved physical properties. The reference mentions that flame retardants may be used in the compositions, but none are specifically mentioned or exemplified.

Japanese Patent Publication No. 117,250 discloses compositions comprised of 40-60% polyamide, 25-35% aromatic polyether and 15-25% styrene and relates that flame retardants, including those containing halogen, phosphorous acid/ or nitrogen, can be used in the compositions.

Japanese Laid-Open Patent Application No. SHO 51-62838 discloses incompatible thermoplastic flame retardantblends comprised of a thermoplastic resin (II) which is incompatible with a thermoplastic resin (I) selected from aromatic polyesters, aromatic polycarbonate and aromatic polyethers. The resin (I) can include polyethers, the resin (II) can include nylon and the flame retardant is said to include phosphorous compounds, including triphenyl phosphate. European Patent applications EP 86 202 386 and EP 87 901 992, both assigned to the same assignee as the present application, disclose that in an impact modified, compatibilized composition comprised of a polyphenylene ether, a polyamide, a compatibilizer and an impact modifier, flame retardants may be employed. No specific flame retardants are mentioned.

European patent application EP 87 902 228 discloses that in such compatibilized polyphenylene ether/polyamide compositions, halogenated flame retardants, alone or in combination with a synergist such as antimony oxide, can be utilized.

It has now been discovered that compositions comprised of a compatibilized blend of polyphenylene ether resin and polyamide resin and having improved physical and flame retardant properties can be obtained by the use of an aromatic phosphorous-containing compound in the blends.

It has also been discovered that reinforced compositions comprised of polyphenylene ether resin, polyamide resin and a reinforced filler and having improved physical and flame retardant properties can be obtained by the use of an aromatic phosphorous compound in the compositions.

## SUMMARY OF THE INVENTION

In accordance with the present invention, there are provided thermoplastic compositions comprised of:

(a) a compatibilized blend comprised of polyphenylene ether resin, polyamide resin and a compatibilizing agent for the two resins selected from the group consisting of polycarboxylic acids and functionalized polyphenylene ether resins in an amount sufficient to effect compatibilization thereof; and

(b) an aromatic phosphorous-containing compound.

Also in accordance with the present invention, there are provided such compositions of (a) and (b) as described above in which component (b), the aromatic phosphorous containing-compound is present in the compositions in an amount sufficient to render the combination of (a) and (b) flame retardant. Preferably, such flame retardant compositions comprise at least 20% by weight of component (b). In preferred embodiments, when the compatibilizing agent is a functionalized polyphenylene ether resin, this functionalized resin may replace the unfunctionalized polyphenylene ether resin portion of component (a) either partly or entirely.

Also in accordance with the invention, there are provided both non-flame retardant and flame retardant thermoplastic compositions further comprised of a reinforcing filler, component (c) , in an amount sufficient to reinforce the combination of (a) and (b).

In other alternative reinforced embodiments, component (c) is present in an amount of at least 10% by weight, based upon the total weight of (a) , (b) and (c). Especially preferably, component (c) is present in an amount of at least 20% by weight, based upon the total weight of (a), (b) and (c).

## DESCRIPTION OF THE INVENTION

The polyphenylene ethers suitable for use in the present invention are homopolymers or copolymers having units with the repeating structural formula:

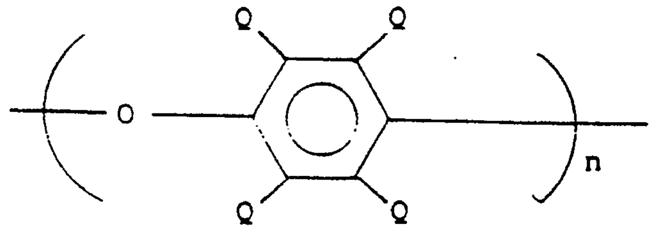

wherein the oxygen ether atom of one unit is connected to the benzene nucleus of the next adjoining unit, and n is a positive integer of at least 20, preferably greater than 50, and each Q is, independently, a monovalent substituent selected from the group consisting of hydrogen, halogen, hydrocarbon, and hydrocarbonoxy groups free of a tertiary alpha-carbon atom and halohydrocarbon and halohydrocarbonoxy groups free of a tertiary-carbon and having at least 2 carbon atoms between the halogen atom and the phenyl nucleus.

A particularly preferred polyphenylene ether homopolymer is poly(2,6-dimethyl-1,4-phenylene) ether. A particularly preferred polyphenylene ether copolymer is poly(2,6-dimethyl-co-2,3,6-trimethyl-1,4-phenylene ether).

Compatible compositions are intended to include any of the well-known polyamides or nylons such as polyamide 6; polyamide 6/6; polyamide 4/6; polyamide 12; polyamide 6/10; and combinations of these where appropriate. Polyamide 6/6 or polyamide 6 is preferred.

Optionally, the compositions of the present invention may further comprise polymeric impact modifiers, inorganic reinforcing additives or other polymers including alkenyl aromatic polymers such as the styrenic polymers.

Improved polyphenylene ether-polyamide compositions may be made by melt blending the above-mentioned ingredients. Alternatively, it may be preferred to achieve optimum property improvements to precompound the property improving compatibilizing agent, together with either one of the polymer resins.

Although the exact physical configuration of the compatibilized compositions of the present invention is not known, it is generally believed that the compositions comprise a dispersion of one polymer in the other. A likely configuration is one wherein the polyphenylene ether is dispersed in a polyamide matrix, however, the inverse may also be possible, particularly where the polyamide is present in only a minor amount. It will be recognized that good dispersion of one polymer in the other will ordinarily afford a useful, compatible thermoplastic product. The compatibilizing compounds of the present invention have been found to achieve such dispersion. Applicant also contemplates that there may be present in the products produced thereby some grafted polyphenylene ether-polyamide products. Thus, all such dispersions as well as graft, partially grafted and non-grafted products are within the full intended scope of the invention.

The polyphenylene ethers suitable for use in the practice of the present invention are well-known in the art and may be prepared by any of a number of catalytic and non-catalytic processes from corresponding phenols or reactive derivatives thereof. Examples of polyphenylene ethers and methods for their production are disclosed in United States Patent Nos. 3,306,874; 3,306,875; 3,257,357; 3,257,301 and 3,787,361, all incorporated herein by reference. For brevity, the term "polyphenylene ether" as used throughout this Specification and the appended claims will include not only unsubstituted polyphenylene ether (made from phenol) but also polyphenylene ethers with various substituents. The term also includes polyphenylene ether copolymers; as well as graft and block copolymers of alkenyl aromatic compounds, especially vinyl aromatic compounds, as disclosed below, and a polyphenylene ether.

Suitable phenol compounds for the preparation of the polyphenylene ethers may be represented by the general formula:

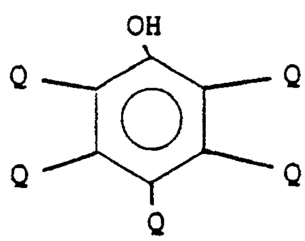

wherein each Q is a monovalent substituent individually selected from the group consisting of hyrdogen,

halohydrogen, aliphatic and aromatic hydrocarbon and hydrocarbonoxy radicals, free of tertiary alpha-carbon atoms, having at least two carbon atoms between the halogen atom and the phenyl nucleus, and wherein at least one Q is hydrogen.

As specific examples of the phenol compound represented by the above formula, there may be given: phenol; o-, m- and p-cresols; 2,6-, 2,5-, 2,4- and 3,5-dimethylphenols; 2-methyl-6-phenyl-phenol; 2,6-diphenyl-phenol; 2,6-diethylphenol; 2-methyl-6-ethyl-phenol; and 2,3,5-, 2,3,6-trimethylphenols. Two or more phenol compounds may be used in combination should copolymers be desired. Additionally, copolyphenylene ethers may also be prepared from a phenol compound of the above general formula with a phenol compound not represented by the above general formula including, for example, a dihydric phenol such as bisphenol-A, tetrabisphenol-A, resorcinol or hydroquinone.

Illustrative of suitable polyphenylene ethers there may be given for example:
poly(2,6-dimethyl-1,4-phenylene) ether;
poly(2-methyl-1,4-phenylene) ether;
poly(3-methyl-1,4-phenylene) ether;
poly(2,6-diethyl-1,4-phenylene) ether;
poly(2,6-dichloromethyl-1,4-phenylene) ether;
poly(2,3,6-trimethyl-1,4-phenylene) ether;
poly(2,3,5,6-tetramethylphenylene) ether;
poly(2,6-dichloro-1,4-phenylene) ether;
poly(2,6-diphenyl-1,4-phenylene) ether;
poly(2,5-dimethyl-1,4-phenylene) ether; and the like.

Further, as mentioned above, copolymers of the phenol compounds may also be used.

Preferred polyphenylene ethers will have the formula:

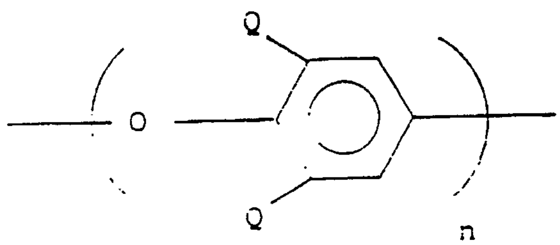

wherein Q is defined above and n is at least 20, preferably at least 50 and more preferably from about 50 to about 200.

Examples of polyphenylene ethers corresponding to the above formula can be found in the above referenced patents and include, among others:
poly(2,6-dilauryl-1,4-phenylene) ether;
poly(2,6-diphenyl-1,4-phenylene) ether;
poly(2,6-dimethoxy-1,4-phenylene) ether;
poly(2,6-diethoxy-1,4-phenylene) ether;
poly(2-methoxy-6-ethoxy-phenylene) ether;
poly(2-ethyl-6-tearyloxy-1,4-phenylene) ether;
poly(2,6-dichloro-1,4-phenylene) ether;
poly(2-methyl-6-phenyl-1,4-phenylene) ether;
poly(2,6-dibenzyl-1,4-phenylene) ether;
poly(2-ethoxy-1,4-phenylene) ether;
poly(2-chloro-1,4-phenylene) ether;
poly(2,6-dibromo-1,4-phenylene) ether and the like.

For the purpose of the present invention, an especially preferred family of polyphenylene ethers include those having a $C_1$ to $C_4$ alkyl substitution in the two positions ortho to the oxygen ether atom. Illustrative members of this class are:
poly(2,6-dimethyl-1,4-phenylene) ether;
poly(2,6-diethyl-1,4-phenylene) ether;
poly(2-methyl-6-ethyl-1,4-phenylene) ether;
poly(2,6-dipropyl-1,4-phenylene) ether;
poly(2-ethyl-6-propyl-1,4-phenylene) ether; and the like.

Most preferred is poly(2,6-dimethyl-1,4-phenylene) ether.

One method for the production of the above polyphenylene ethers is by the oxidation of a phenol compound by oxygen or an oxygen-containing gas in the presence of a catalyst for oxidative coupling. There is no particular limitation as to the choice of catalysts and any catalysts for oxidation polymerization can be employed. As typical examples of the catalyst, there may be given a catalyst comprising a cuprous salt and a tertiary amine and/or secondary amine, such as cuprous chloride-trimethylamine and dibutylamine, cuprous acetate-triethylamine or cuprous chloride-pyridine; a catalyst comprising a cupric salt, a tertiary amine, and an alkali metal hydroxide, such as cupric chloride-pyridine-potassium hydroxide; a catalyst comprising a manganese salt and a primary amine, such as manganese chloride-ethanolamine or manganese acetate-ethylenediamine; a catalyst comprising a manganese salt and an alcoholate or phenolate, such as manganese chloride-sodium metholate or manganese chloride-sodium phenolate; and a catalyst comprising a cobalt salt and tertiary amine.

Polyamides suitable for the preparation of the compositions may be obtained by polymerizing a monoamino-monocarboxylic acid or a lactam thereof having at least 2 carbon atoms between the amino and carboxylic acid group; or by polymerizing substantially equimolecular proportions of a diamine which contains at least 2 carbon atoms between the amino groups and dicarboxylic acid; or by polymerizing a monoaminocarboxylic acid or a lactam thereof as defined above together with substantially equimolecular proportions of a diamine and a dicarboxylic acid. The dicarboxylic acid may be used in the form of a functional derivative thereof, for example an ester or acid chloride.

The term "substantially equimolecular" proportions (of the diamine and of the dicarboxylic acid) is intended to encompass both strict equimolecular proportions and slight departures therefrom which are involved in conventional techniques for stabilizing the viscosity of the resultant polyamides.

Examples of the afore-mentioned monoamino-monocarboxylic acids or lactams thereof which are useful in preparing tie polyamides include those compounds containing from 2 to 26 carbon atoms between the amino and carboxylic acid groups, said carbon atoms forming a ring with the -CO-NH- group in the case of a lactam. As particular examples of amino-carboxylic acids and lactams there may be mentioned gamma-aminocaproic acid, butyrolactam, caprolactam, capryllactam, enantholactam, undecanolactam, dodecanolactam, and 3- and 4-aminobenzoic acids.

Examples of diamines suitable for preparing the polyamides include diamines of the general formula

$H_2N(CH_2)_nNH_2$

wherein n is an integer of from 2 to 16, such as trimethylenediamine, tetramethylenediamine, pentamethylenediamine, octamethylenediamine and especially hexamethylenediamine.

The dicarboxylic acids may be aromatic, for example, isophthalic and terephthalic acids. Preferred dicarboxylic acids are of the formula

HOOC-Y-COOH

wherein Y represents a divalent aliphatic group containing at least 2 carbon atoms, and examples of such acids are sebacic acid, octadecanedoic acid, suberic acid, glutaric acid, pimelic acid and adipic acid.

Typical examples of the polyamides or nylons, as these are often called, include for example polyamides 6, 6/6, 11, 12, 6/3, 6/4, 6/10 and 6/12 as well as polyamides resulting from terephthalic acid and trimethyl hexamethylene diamide, polyamides resulting from solipic acid and meta xylylenediamines, polyamides resulting from adipic acid, azelaic acid and 2,2-bis(p-aminocycliohexyl) propane and polyamides resulting from terephthalic acid and 4,4'-diamino-dicylcohexylmethane. Preferred polyamides are the polyamides 6, 6/6, 4/6, 11 and 12, most preferably polyamide 6/6 or polyamide 6.

The blending ratio of polyphenylene ether to polyamide is usually 5 to 95% by weight, preferably 25 to 75% by weight, of the former, to 95 to 5% by weight, preferably 75 to 25% by weight, of the latter. When the polyamide is less than 5 weight percent, its effect to improve solvent resistance is small, and when it exceeds 95 weight percent, thermal properties such as heat distortion temperature tend to become poor.

Compatibility between the polyphenylene ether resin and the polyamide resin can be preferably achieved when the compatibilizing agent is chemically or physically associated with both resins.

For best results, the compatibilizers are blended in an amount of 0.01 to 10 parts by weight, preferably 0.01 to 5 parts by weight, more preferably 0.1 to 2 parts by weight, to each 100 parts by weight of the total of the polyphenylene ether resin and polyamide resin. If the amount is less than 0.01 parts by weight, the desired effect as a compatibilizer is not attained. On the other hand, if the amount exceeds 10 parts by weight, surface appearance of the molded article is sometimes poor. The compatibilizer of the present

invention can be any compound or group of compounds known to effect compatibility between a polyphenylene ether resin and a polyamide resin. Mixtures of compatibilizers can be used.

Suitable compatibilizers include:

(i) a saturated aliphatic polycarboxylic acid or derivative thereof;

(ii) a functionalized polyphenylene ether consisting of a reaction product of (a) a polyphenylene ether and (b) a compound of the general formula (i)-Z-( ii) , wherein (i) is at least a group of the formula [x-C(O)] with X=F, Cl, Br, I, OH, -OR, or -O-C(O)-R with R=H, alkyl or aryl, wherein (ii) is at least a carboxylic acid, acid anhydride, acid amide, imido, carboxylic acid ester, amino or hydroxyl group, and in which the groups (i) and (ii) are covalently bonded together via a bridge Z, Z being a bivalent hydrocarbon radical; and

(iii) the reaction product of a) 1,2-substituted olefinic compound with carboxyl group or acid anhydride group, b) a polyphenylene ether and c) a radical initiator. This compatibilizer can be present in the preferred amount of from 0.5 to 150 parts by weight per 100 parts by weight of polyamide plus polyphenylene ether.

The agents for improving the compatibility mentioned in (ii) and (iii) can replace the polyphenylene ether of component (a) in the polymer mixtures according to the invention, entirely or partly.

The compatibilizer used in the present invention, when of type (i), the saturated aliphatic polycarboxylic acid or a derivative thereof, is represented by the formula:

$$(R^{I}O)_{m}R(COOR^{II})_{n}(CONR^{III}R^{IV})_{s}$$

wherein R is a linear or branched chain, saturated aliphatic hydrocarbon of from 2 to 20, preferably 2 to 10, carbon atoms; $R^{I}$ is selected from the group consisting of hydrogen, alkyl, aryl, acyl and carbonyl and dioxy group of 1 to 10, preferably 1 to 6, more preferably 1 to 4, carbon atoms, most preferably hydrogen; $R^{II}$ is selected from the group consisting of hydrogen, alkyl and aryl group of from 1 to 20 carbon atoms, preferably from 1 to 10 carbon atoms; each of $R^{III}$ and $R^{IV}$ is selected from the group consisting of hydrogen, an alkyl and aryl group of from 1 to 10, preferably from 1 to 6, most preferably 1 to 4, carbon atoms; m is equal to 1 and (n + s) is greater than or equal to 2, preferably equal to 2 or 3, and n and s are each greater than or equal to zero and ($OR^{I}$) is in an alpha or beta position to a carbonyl group and at least two carbonyl groups are separated by 2 to 6 carbon atoms.

Examples of the derivatives of the saturated aliphatic polycarboxylic acids according to the invention include esters, amides, anhydrides, hydrates and salts of the saturated aliphatic polycarboxylic acids. Illustrative of the saturated aliphatic polycarboxylic acids are citric acid, malic acid and agaricic acid. Illustrative of said esters include acetyl citrate and mono- or di- stearyl citrates and the like. Suitable acid amides include for example N,N'-diethyl citric acid amide; N,N'-dipropyl citric acid amide; N-phenyl citric acid amide; N-dodecyl citric acid amid; N,N'-didocecyl citric acid amide and N-dodecyl malic acid amide. Preferably, component (c), when a saturated aliphatic polycarboxylic acid, is citric or malic acid. The salts include calcium malates, calcium citrate, potassium malate and potassium citrate.

The compatibilizer used in the present invention, when of type (ii), includes the agents mentioned for improving the compatibility which can be obtained by reacting a polyphenylene ether with, for example, chloroethyanoyl succinic anhydride; trimellitic anhydride acid chloride; chloroformyl succinic anhydride; 1-acetoxyacetyl-3,4-dibenzoic acid anhydride; trimellitic anhydride acid acetic anhydride and the acid chloride of terephthalic acid. The compounds formed can be purified by precipitation in methanol and acetone. These agents may be used in combination with primary or secondary amines, for example, butyl amine, dibutyl amine, n-octadecyl amine. Preferred are the polyphenylene ethers functionalized with trimellitic anhydride acid chloride and the method by which they can be obtained is described in Aycock et al., U.S. Patent No. 4,600,741.

The compatibilizer used in the present invention, when of type (iii) , includes the compounds and their mode of preparation which are disclosed in Japanese Patent Applications 59/059,724; 59/086,653 and 59/066,452. Component (vii) of this type relates to the reaction product of a) a 1,2-substituted olefinic compound with carboxylic group or acid anhydride group (for example, maleic acid anhydride), b) a polyphenylene ether and c) a radical initiator (for example, benzoyl peroxide).

The preferred compatibilizer is a functionalized polyphenylene ether resin which can be obtained as follows.

For example, a linear polyphenylene ether having an end group of formula I:

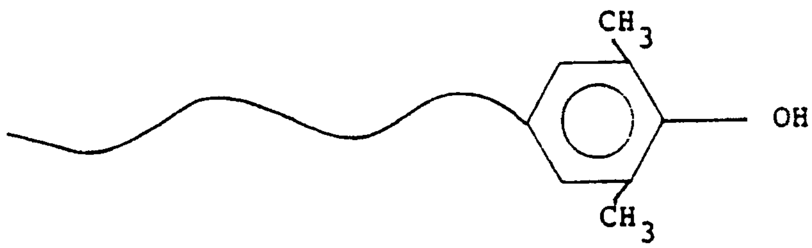

(I)

may be reacted in the presence of heat and solvent with an acyl compound such as trimellitic anhydride acid chloride of formula II:

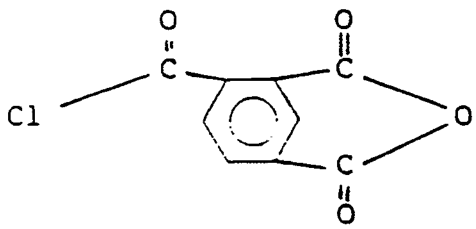

(II)

to provide a PPE-TAAC compatibilizing agent of formula III which may be appropriately purified as by precipitation in methanol or acetone:

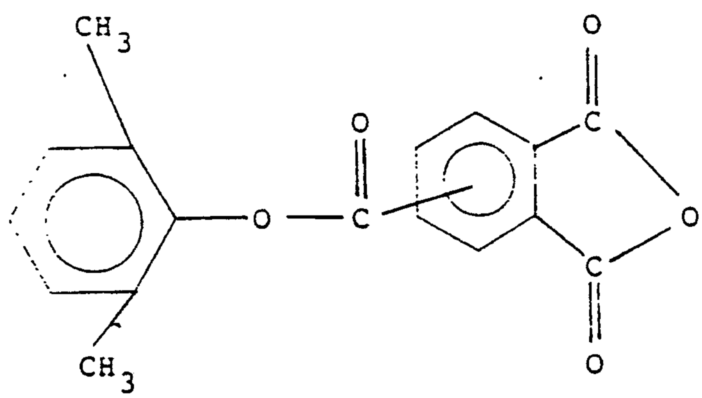

(III)

This exemplary PPE-TAAC compatibilizing agent can partially or totally replace the PPE in a PPE/polyamide blend. A preferred thermoplastic blend of the present invention would comprise PPE/PPE-TAAC/polyamide, or merely PPE-TAAC/polyamide.

The anhydride portion of this compatibilization agent is believed to be primarily responsible for the chemical or physical association of the agent with the polyamide resin.

Of course it is contemplated that the compatibilization agent can be generalized to encompass a number of other effective agents which would react similarly to the preferred PPE-TAAC agents discussed above.

For example, the portion of the compatibilizing molecule associated or bonded to the PPE resin chain can be generalized as an acyl-functional group depicted by formula IV:

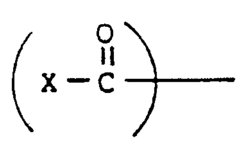

(IV)

where X is f, CL, Br, I, OH,

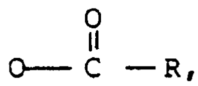

etc. and where R is H or an aliphatic or aromatic radical having less than about 10 carbon atoms. The moiety of formula IV is covalently bonded to a group which is primarily responsible for associating or bonding with the polyamide portion of the thermoplastic composition. In the preferred embodiment discussed above, this group is an anhydride group as shown in formula V:

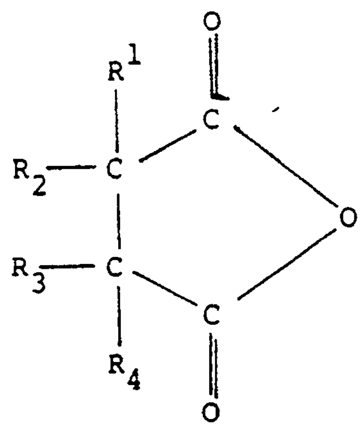

(V)

where $R_1$, $R_2$, $R_3$ and $R_4$ are each, independently, H or an aliphatic or aromatic radical (having, preferably, less than about 10 carbon atoms).

Examples of suitable materials falling within the scope of the invention include but are not limited to the following compatibilizer precursors:

chloroethyanoylsuccinic anhydride

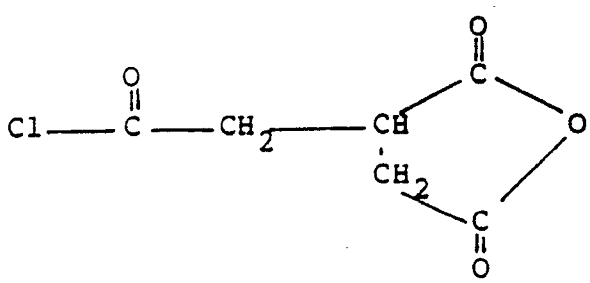

trimellitic anhydride acid chloride

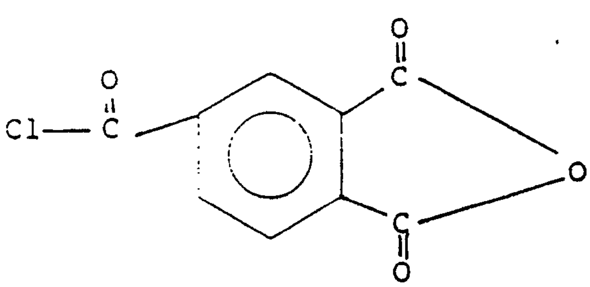

chloroformylsuccinic anhydride

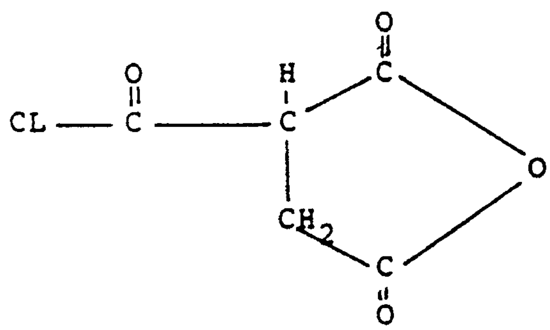

1-acetoxyacetyl-3,4-dibenzoic acid anhydride

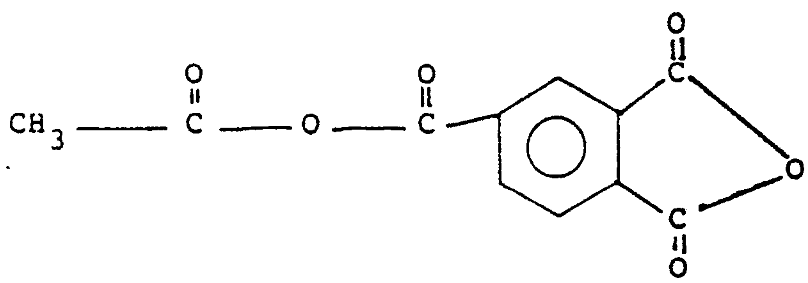

of course, compatibilizer precursors effective in this invention are not limited to the preferred anhydrides mentioned above. It is well-known that polyamides will react or associate with a very large number of molecules containing groups chosen from among carboxylic acid (including mono- and poly-acids), acid anhydride, acid amide, imido carboxylic acid ester, amino or hydroxyl groups.

Thus, it is contemplated that the acid chloride of terephthalic acid can also be utilized:

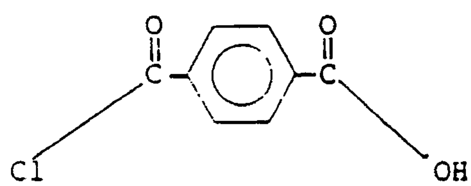

The amount of the compatibilizing precursor to be used is that amount which manifests property improvements, especially improved compatibility as well as improved processability, impact strength and/or elongation, in the polyphenylene ether-polyamide compositions. In general, the amount of compatibilizer precursor, used to react with polyphenylene ether will be up to about 6%, preferably from about 0.05 to about 4% by weight based on the polyphenylene ether. The specific amount of the compatibilizer to be used to achieve optimum results for a given composition is dependent, in part, on the specific compatibilizer precursor, the specific polyphenylene ether to be reacted, the specific polyphenylene ether and polyamide to be compatibilized and the weight ratio of said polymers and the processing conditions. A variety of suitable compositions can be achieved without undue experimentation.

The above-mentioned property improving compatibilizer compound may be used alone or in combination with a primary or secondary amine. The presence of the amine may enhance the improvement of certain physical properties when used in combination with various compatibilizers. Suitable amines include those primary and secondary amines having from 1 to about 20, preferably from 1 to about 10 carbon atoms. Examples of said suitable amines are methyl ethylamine, diethylamine, butylamine, dibutylamine, analine, n-octadecylamine and the like. The amount of the primary or secondary amine to be used is generally up to about 3% by weight, preferably up to about 1% by weight.

The aromatic phosphorous-containing compound utilized in the present invention can be of the general formula:

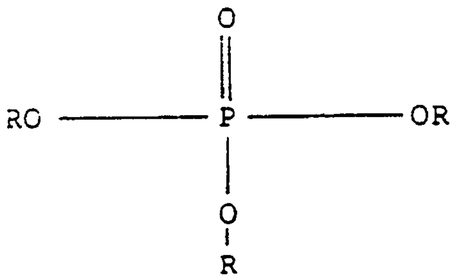

where R is the same or different and is alkyl, cycloalkyl, aryl, alkyl substituted aryl, halogen substituted aryl, aryl substituted alkyl, halogen, or a combination of any of the foregoing, provided at least one R is aryl.

Examples include phenyl bisdodecyl phosphate, phenyl bisneopentyl phosphate, phenylbis(3,5,5'-trimethyl-hexyl-phosphate), ethyldiphenyl phosphate, 2-ethyl-hexyldi-(p-tolyl) phosphate, bis-(2-ethylhexyl) p-tolylphosphate, tritolyl phosphate, bis-(2-ethylhexyl) phenyl phosphate, tri-(nonylphenyl) phosphate, di-(dodecyl)p-tolyl phosphate, tricresyl phosphate, triphenyl phosphate, dibutylphenyl phosphate, 2-chloroethyldiphenyl phosphate, p-tolyl bis(2,5,5'-trimethyl-hexyl)phosphate, 2-ethylhexyldiphenyl phosphate, and the like. The preferred phosphates are those in which each R is aryl. Especially preferred is triphenyl phosphate, which may be either unsubstituted or substituted, for example, isopropylated triphenyl phosphate.

Alternatively, the aromatic phosphorous-containing compound can be a di- or polyfunctional compound or polymer having the formula

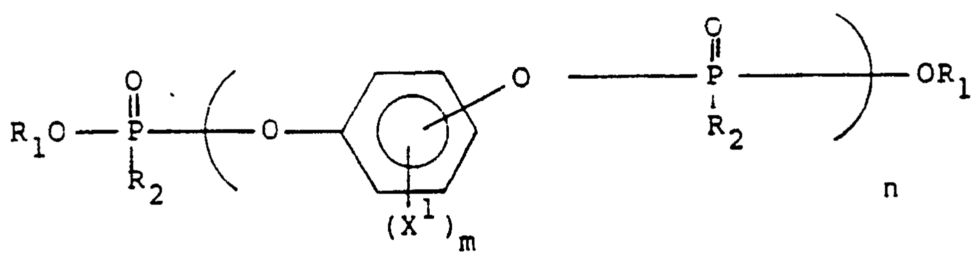

, or

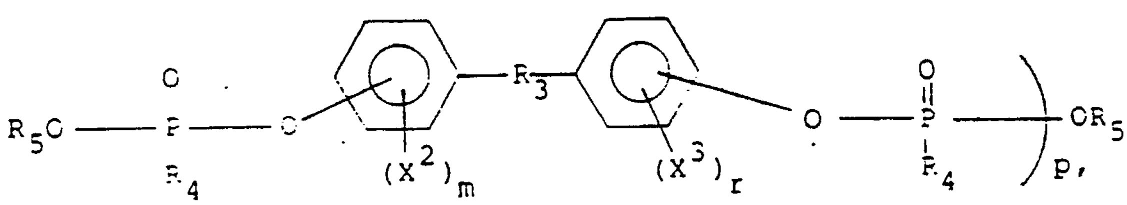

or

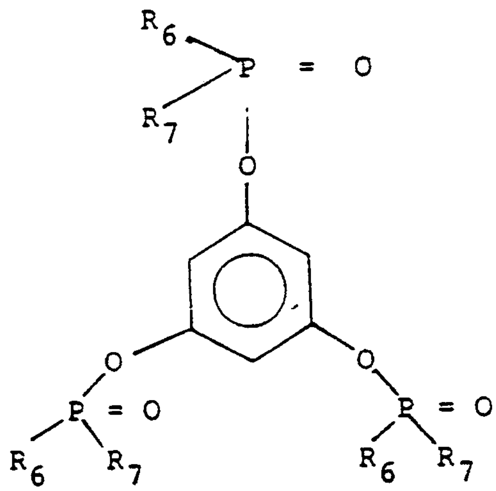

including mixtures thereof, in which $R_1$, $R_3$ and $R_5$ are, independently, hydrocarbon; $R_2$, $R_4$, $R_6$ and $R_7$ are, independently, hydrocarbon or hydrocarbonoxy; $x^1$, $X^2$ and $X^3$ are halogen; m and r are 0 integers from 1 to 4, and n and p are integers from 1 to 30.

Examples include the bis phenyl phosphates of resorcinol, hydroquinone and bisphenol-A, respectively, or their polymeric counterparts.

Methods for the preparation of the afore-mentioned di- and polyfunctional aromatic phosphates are described in British Patent No. 2,043,083.

In those embodiments where a reinforcing agent is employed, there can be utilized a reinforcing amount of any one of the many reinforcing agents which are well-known in the thermoplastic art. These reinforcing agents serve to improve the strength of the composites of the present invention and are especially desirable where improved strength is necessary or desired.

The preferred reinforcing material will be selected from glass fibers, carbon fibers, glass beads or mixtures thereof. These materials are well-known in the thermoplastic resin art, and the first two are widely used as reinforcements for structural materials. Compositions for lower performance applications can be obtained without using a reinforcing material; however, the strength and durability of the composite is substantially improved by including such materials.

Glass fibers are the most common reinforcing agents, and are preferred for the compositions of the present invention because of their low cost and the desirable properties they impart to the compositions. The glass fibers which may be employed in this composition are generally so-called "chopped" strands which contain strands having average lengths from about 3 to about 6 mm. Longer strands tend to increase the abrasiveness of the composites whereas shorter strands do not impart the desired strength to the composite. Preferred glass fibers have average strand lengths of approximately 3 mm. In addition, the strands are advantageously relatively fine, and have diameters ranging from about 5 to about 15 microns, preferably about 10 microns.

Carbon fibers are employed for the production of extremely tough and durable resin composites. The cost of carbon fibers is presently considerably higher than that of glass fibers, therefore, generally their use would be limited to those applications where their superior properties outweigh the higher costs. The carbon fibers which may be employed in the compositions have strand lengths generally ranging from about 0.4 mm to about 6 mm and diameters ranging from about 5 to about 25 microns.

Glass beads can also be used as reinforcing materials and can be substituted in whole or in part for glass or carbon fibers. Glass beads are commercially available in a wide range of particle sizes, and those beads having particle sizes ranging from about 1 to about 55 microns generally can be employed. Preferred glass beads have particle sizes ranging from about 5 to about 45 microns.

The total amount of reinforcing material used in the present compositions can range from zero to about 70% by weight of the total thermoplastic/reinforcing agent composition. Preferred concentrations for glass fibers range from about 5% by weight to about 40% by weight of the composition and preferably are about 20% by weight of the composition. Preferred ranges far carbon fibers range from about 5% by weight to about 30% by weight with a preferred concentration of about 10% by weight of the composition. Preferred ranges for glass beads range from about 5% by weight to about 40% by weight with a preferred concentration of about 20% by weight of the composition.

In the practice of the present invention, it may be further desirable to add rubbery high-molecular

weight polymers to further improve the physical properties of a polyphenylene ether/polyamide blend such as impact strength, and processability. The rubbery high-molecular weight materials include natural and synthetic polymeric materials showing elasticity at room temperature. More specifically, the rubbery high molecular weight materials include natural rubber, thermoplastic elastomers as well as homopolymers and copolymers, including random, block and graft copolymers derived from various suitable monomers known to those skilled in the art including butadiene, possibly in combination with vinyl aromatic compounds, especially styrene. As specific examples of the rubbery high-molecular weight materials, there may be given, for example, natural rubber, butadiene polymers, styrene copolymers, butadiene/ styrene copolymers, isoprene polymers, chlorobutadiene polymers, butadiene/acrylonitrile copolymers, isobutylene polymers, isobutytlene/butadiene copolymers, isobutylene/ isoprene copolymers, acrylic ester polymers, ethylene propylene copolymers, ethylene/propylene/diene copolymers, thiokol rubber, polysulfide rubber, polyurethane rubber, polyether rubber (e.g. polypropylene oxide) and epichlorohydrin rubber.

A preferred class of rubber materials are copolymers, including random, block and graft copolymers of vinyl aromatic compounds and conjugated dienes. Exemplary of these materials there may be given hydrogenated or non-hydrogenated block copolymers of the A-B-A and A-B type wherein A is polystyrene and B is an elastomeric diene, e.g. polybutadiene, radial teleblock copolymer of styrene and a conjugated diene, acrylic resin modified styrene-butadiene resin and the like; and graft copolymers obtained by graft-copolymerization of a monomer or monomer mix containing a styrenic compound as the main component to a rubber-like polymer. The rubber-like polymer used in the graft copolymer as already described herein include polybutadiene, styrene-butadiene copolymer, acrylonitrile-butadiene copolymer, ethylene-propylene copolymer, polyacrylate and the like. The styrenic compounds include styrene, methylstyrene, dimethylstyrene, isopropylstyrene, alpha-methylstyrene, ethylvinyltoluene and the like. The monomer which may be used together with the styrenic compound includes, for example, acrylate, methacrylate, acrylonitrile, methyacrylonitrile, methyacrylic acid, acrylic acid and the like.

Finally, additional thermoplastic elastomers suitable for use as the rubbery material include thermoplastic polyester elastomers, thermoplastic polyether-ester elastomers, ethylenic ionomer resins and the like.

The amount of the rubbery polymer used will be up to about 100 parts by weight, preferably from about 5 to about 50 parts by weight based on 100 parts by weight of a mixture of polyphenylene ether and polyamide. However, when the amount is less than 2 parts by weight, the effect of the rubbery polymer to improve impact resistance is poor. When the amount is more than 100 parts by weight, the impact resistance is much improved, however, some loss of other physical properties may result. In the interest of balancing impact resistance and other physical properites, it is preferred to use less than 100 parts by weight of the rubber polymer.

The polyphenylene ether resin/polyamide resin compositions may also comprise similar amounts, as referred to above, of alkenyl aromatic compounds. These alkenyl aromatic compounds may or may not be partially or wholly copolymerized with and/or grafted to the polyphenylene ether. Especially suitable are the styrene resins described in for example U.S. Patent No. 3,383,435, incorporated herein by reference.

In general, the styrene resins will have at least 25% by weight of the polymer units derived from a vinyl aromatic compound of the formula:

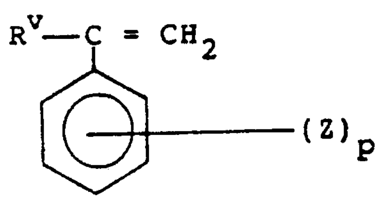

wherein $R^V$ is hydrogen, lower alkyl or halogen, Z is vinyl, halogen or lower alkyl, and p is 0 or an integer or from 1 to the number of replaceable hydrogen atoms on the benzene nucleus. Herein, the term "lower alkyl" is intended to mean alkyl of from 1 to 6 carbon atoms.

The term "styrene resin" as used broadly throughout this disclosure and the appended claims includes, by way of example, homopolymers such as polystyrene, polychlorostyrene and polybromostyrene, as well as polystyrenes, including high impact polystyrenes, which have been modified by a natural or synthetic rubber, e.g. polybutadiene, polyisoprene, butyl rubber, ethylene-propylene diene copolymers (EPDM rubber) , ethylene-propylene copolymers, natural rubbers, polysulfde rubbers, polyurethane rubbers, styrene-butadiene rubbers (SBR), and the like; styrene-containing copolymers such as styrene-acrylonitrile copolymers (SAN), stryene-butadiene copolymers, styrene-bromostyrene copolymers especially styrene-dibromostyrene copolymers, styrene-acrylonitrile-butadiene, terpolymers (ABS), poly-alpha-methylstyrene, copolymers of ethylvinyl benzene and divinyl-benzene and the like.

Finally, in addition to the foregoing, the resin compositions of the present invention may further comprise other additives, including various plasticizers, processing aids, non-reinforcing fillers, colorants, stabilizers and the like known to those skilled in the art.

The method for producing the resin compositions of the present invention is not particularly limited, and the conventional methods are satisfactorily employed. Generally, however, melt blending methods are desirable. The time and temperature required for melt-blending are not particularly limited, and they can properly be determined according to the composition of the material. The temperature varies somewhat with the blending ratio of the polyphenylene ether to polyamide, but it is generally within a range of 270° to 350° C. A prolonged time and/or a high shear rate is desirable for mixing, but the deterioration of the resin composition may advance under such conditions. Consequently, the time needs to be determined taking into account these points.

Any of the melt-blending apparatuses may be used, if it can handle a molten viscous mass. The method may be applied in either a batchwise form or a continuous form. Specifically, extruders, Banbury mixers, rollers, and the like may be exemplified.

With respect to other compositions, all ingredients may be added directly to the processing system or certain additives may be precompounded with each other or either polymer prior to blending with the other polymer.

The following examples are given to illustrate the invention without limitation.

## TABLE I

### EXAMPLES 1-2 AND COMPARISON EXAMPLES A

| Example | A* | 1 | 2 |
|---|---|---|---|
| Chemical Composition | | | |
| Polyphenylene ether (a) | 25 | 20 | 15 |
| Functionalized Polyphenylene Ether (b) | 25 | 20 | 15 |
| Polyamide (c) | 40 | 40 | 40 |
| Impact Modifier (d) | 10 | 10 | 10 |
| Triphenyl Phosphate | -- | 10 | 20 |

* Comparison Example

(a) PPO® (General Electric Co., intrinsic viscosity 0.40 dl./gm.)

(b) PPO-TAAC

(c) xPN-1250 (nylon 6 of Allied Chemical, Inc.)

(d) KG 1651 (Shell Chemical Company), a hydrogenated styrene-butadiene-styrene copolymer of the A-B-A type

**TABLE I (cont'd)**

| Properties | A* | 1 | 2 |
|---|---|---|---|
| Izod Impact (ft.-lbs./in. (notched)) | 11.0 | 11.2 | >16.0 |
| HDT (°F@66 psi) | 359 | 264 | 153 |
| Tensile Yield (psi x $10^3$) | 9.1 | 8.6 | 6.1 |
| Tensile Strength (psi x $10^3$) | 7.5 | 7.3 | 6.7 |
| Tensile Elongation (%) | 43 | 103 | 173 |
| Flexural Modulus (psi x $10^3$) | 332 | 348 | 303 |
| Flexural Strength (psi x $10^3$) | 13.3 | 13.2 | 9.4 |
| Dynatup Impact (ft.-lbs.) RT | 46.2D | 40.90 | 43.8D |
| UL Subject 94 1/8" (sec.) | Fail (Burned & Drip) | Fail (Burn Only) | V-1 (8.2) |

As can be seen from the above, when 10 parts of the aromatic phosphorous-containing compound replaces 10 parts of the combination of PPE and functionalized PPE, the composition shows improved tensile elongation and flexural modulus (while essentially maintaining other physical properties) and burns, but does not drip burning resin. When 20 parts of the aromatic phosphorous-containing compound is added, the thermoplastic resin exhibits very improved Izod impact and tensile elongation properties and attains a V-1 flame retardancy rating.

**TABLE 2**

EXAMPLES 5-7 AND COMPARISON EXAMPLES B-C

| Example | B* | 5 | 6 | C* | 7 |
|---|---|---|---|---|---|
| Chemical Composition | | | | | |
| Polyphenylene Ether[(a)] | 45 | 35 | 25 | 35 | 15 |
| Polyamide[(b)] | 35 | 35 | 35 | 35 | 35 |
| Compatibilizer[(c)] | 0.3 | 0.3 | 0.3 | 0.3 | 0.3 |
| Glass Fibers | 20 | 20 | 20 | 30 | 30 |
| Zinc Stearate | 0.5 | 0.5 | 0.5 | 0.5 | 0.5 |
| Triphenyl Phosphate | -- | 10 | 20 | -- | 20 |

* Comparison Example
(a) PPO® (General Electric Co., intrinsic viscosity 0.40 dl./gm.)
(b) NP-10000 (nylon 6,6 of Nylon Polymers, Inc.)
(c) Citric Acid

**TABLE 2 (cont'd)**

| Properties | B* | 5 | 6 | C* | 7 |
|---|---|---|---|---|---|
| Izod Impact (ft.-lbs./in.) | 0.7 | 0.8 | 1.1 | 0.9 | 1.4 |
| HDT (°F@ 264 psi) | 405 | 391 | 392 | 434 | 444 |
| Tensile Strength (psi x $10^3$) | 16.5 | 16.3 | 13.3 | 18.9 | 13.1 |
| Tensile Elongation (%) | 7.4 | 6.3 | 6.7 | 6.6 | 6.6 |
| Flexural Modulus (psi x $10^3$) | 835 | 935 | 784 | 1110 | 860 |
| Flexural Strength (psi x $10^3$) | 25.0 | 22.8 | 18.6 | 28.2 | 19.6 |
| UL Subject 94 Test | Fail | Fail | Fail | Fail | V-1 |
| 1/8" (sec.) | (Burned & Drip) | (Burn) | (Burn) | (Burn) | (12.0) |

As can be seen from the above, in glass fiber reinforced compositions, having 20 weight percent glass

fibers, when 10 parts of the aromatic phosphate-containing compound replaces 10 parts of the PPE, the Izod impact and flexural modulus are improved; and in such compositions having 20 parts of the aromatic phosphate-containing compound, the Izod impact is significantly improved.

Also, in the glass fiber reinforced compositions having 30 weight percent glass fibers, the substitution of 20 parts of the aromatic phosphorous-containing compound for 20 parts of the PPE greatly improves Izod impact strength and confers a V-1 flame retardancy rating on the composition.

## Claims

**1.** A thermoplastic composition comprised of:
(a) a compatibilized blend comprised of polyphenylene ether resin, polyamide resin and a compatibilizing agent for the two resins selected from the group consisting of polycarboxylic acids and functionalized polyphenylene ethers in an amount sufficient to effect compatibilization thereof; and
(b) an aromatic phosphorous-containing compound.

**2.** The composition according to Claim 1, wherein the polyphenylene ether is comprised of a homo- or copolymer having units of the formula:

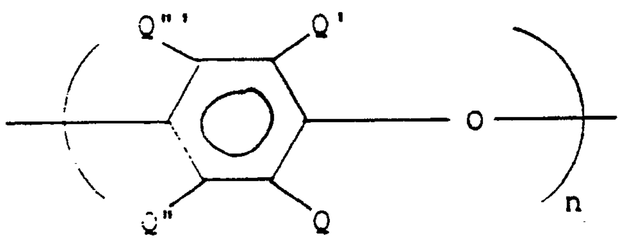

wherein Q, Q', Q" and Q"' are independently selected from the group consisting of hydrogen, halogen, hydrocarbon, halohydrocarbon, hydrocarbonoxy, and halohydrocarbonoxy; and n represents the total number of monomer units and is an integer of at least about 20.

**3.** The composition according to Claim 1, wherein the polyphenylene ether is a homo- or copolymer produced from one or more polyphenylene ethers comprised of:
poly(2,6-dipropyl-1,4-phenylene ether);
poly(2,6-diphenyl-1,4-phenylene ether);
poly(2-methyl-6-tolyl-1,4-phenylene ether);
poly(2-methyl-6-butyl-1,4-phenylene ether);
poly(2,6-dimethoxyl-1,4-phenylene ether);
poly(2,3,6-trimethyl-1,4-phenylene ether);
poly(2,3,5,6,-tetramethyl-1,4-phenylene ether);
poly(2,6-diethoxyl-1,4-phenylene ether);
poly(2,6-dimethyl-1,4-phenylene ether);
poly(2,6-diethyl-1,4-phenylene ether);
poly(2,6-dibutyl-1,4-phenylene ether); and
poly(2,6-dilauryl-1,4-phenylene ether).

**4.** The composition according to Claim 1, wherein the polyphenylene ether is comprised of poly(2,6-dimethyl-1, 4-phenylene ether).

**5.** The composition according to Claim 1, wherein the polyphenylene ether is comprised of a copolymer of poly(2,6-dimethylco-2,3,6-trimethyl-1 and poly(2,6-dimethylco-2-methyl-6-butyl-1,4-phenylene ether).

**6.** The composition according to Claim 1, wherein the polyphenylene ether is present in an amount of from about 10 to about 90 parts by weight, based upon 100 parts by weight of polyphenylene ether and polyamide.

**7.** The composition according to Claim 1, wherein the polyphenylene ether is present in an amount of

from about 25 to about 75 parts by weight, based upon 100 parts by weight of polyphenylene ether and polyamide.

8. The composition according to Claim 1, wherein the polyamide is selected from the group consisting of polyamide 4/6, polyamide 6, polyamide 6/6, polyamide 6/10, polyamide 3/6, polyamide 6/12, polyamide 11 and polyamide 12.

9. The composition according to Claim 1, wherein the polyamide is selected from the group consisting of polyamide 6 and polyamide 6/6.

10. The composition according to Claim 1, wherein the compatibilizing agent is comprised of a polycarboxylic acid selected from the group consisting of citric acid and malic acid.

11. The composition according to Claim 19, wherein the polycarboxylic acid is citric acid.

12. The composition according to Claim 1, wherein the functionalized polyphenylene ether resin is the reaction product or polyphenylene ether resin containing a hydroxyl end group and an acyl compound.

13. The composition according to Claim 12, wherein the acyl compound is comprised of trimellitic anhydride acid chloride.

14. The composition according to Claim 1, wherein the polyphenylene ether resin is replaced entirely or partly by a functionalized polyphenylene ether resin.

15. The composition according to Claim 1, wherein the compatibilizing agent is present in an amount of from about 0.01 to about 10 parts by weight, based upon 100 parts by weight of polyphenylene ether resin and polyamide resin.

16. The composition according to Claim 1, wherein the aromatic phosphorous-containing compound is selected from the group consisting of those having the formula:

(i)

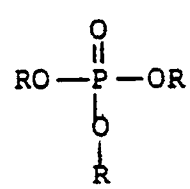

where R is the same or different and is alkyl, cycloalkyl, aryl substituted aryl, halogen substituted aryl, aryl substituted alkyl, halogen or a combination of the foregoing, provided that of at least one R is aryl;

(ii)

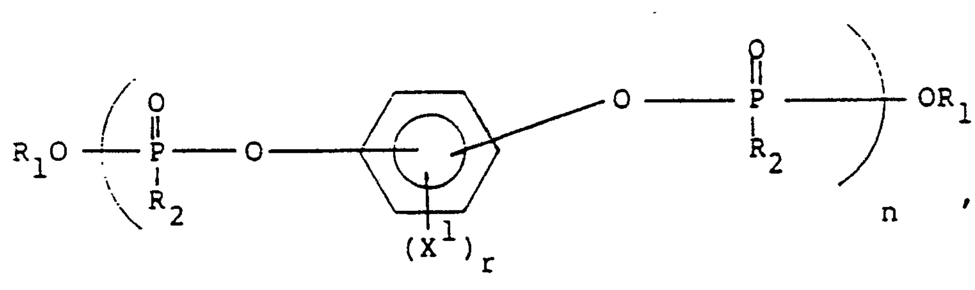

(iii) 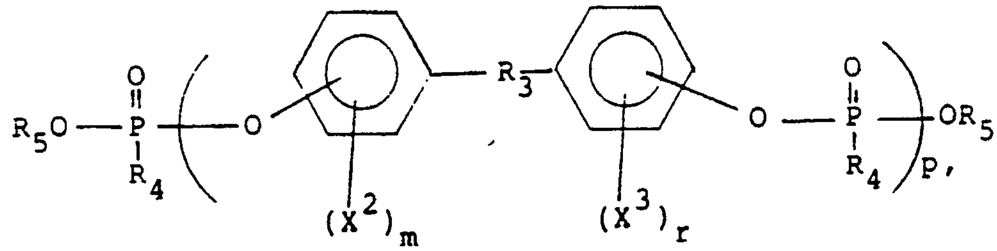

and

(iv) 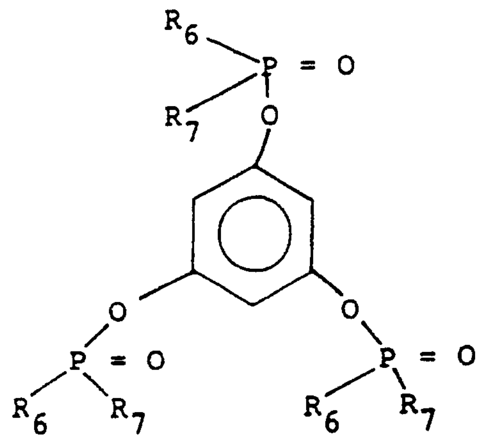

in which $R_1$, $R_3$ and $R_5$ are, independently, hydrocarbon; $R_2$, $R_4$, $R_6$ and $R_7$ are, independently, hydrocarbon or hydrocarbonoxy; $x^1$, $x^2$ and $X^3$ are halogen; m and r are 0 or integers from 1 to 4, and n and p are integers from 1 to 30 and mixtures of more than one of (i), (ii), (iii) and (iv).

**17.** The composition according to Claim 16, wherein the aromatic phosphorous-containing compound is selected from the group consisting of triphenyl phosphate, isopropylated triphenyl phosphate, isobutylated triphenyl phosphate, bisphenyl phosphate of resorcinol, bisphenyl phosphate of hydroquinone, bisphenyl phosphate of bisphenol-A and mixtures of more than one of the foregoing.

**18.** The composition according to Claim 1 further comprising:
(c) a reinforcing filler in an amount sufficient to reinforce the combination of (a) and (b).

**19.** The composition according to Claim 18, wherein the reinforcing filler is selected from the group consisting of glass fibers, glass beads, carbon fillers and mixtures of more than one of the foregoing.

**20.** The composition according to Claim 18, wherein component (c) is present in an amount of at least 10% by weight, based on 100 parts by weight of (a) and (b).

**21.** The composition according to Claim 1 wherein the polyphenylene ether resin is comprised of poly(2,6-dimethyl-1,4-phenylene ether), the polyamide is selected from the group consisting of polyamide 6 and polyamide 6/6, the compatibilizing agent is selected from the group consisting of citric acid and PPO-TAAC and the aromatic phosphorous-containing compound is comprised of triphenyl phosphate.

**22.** The composition according to Claim 21 further comprising at least about 20 parts by weight, based upon 100 parts by weight of the composition of Claim 20, of glass fibers.

**23.** An article of manufacture produced from the composition of Claim 1.

**24.** An article of manufacture produced from the composition of Claim 21.

**25.** An article of manufacture produced from the composition of Claim 22.

**26.** A flame retardant thermoplastic composition comprise of:

(a) a compatibilized blend comprised of polyphenylene ether resin, polyamide resin, and a compatibilizng agent for the two resins selected from the group consisting of polycarboxylic acids and functionalized polyphenylene ethers; and

(b) an aromatic phosphorous-containing compound in an amount sufficient to render the combination of (a) and (b) flame retardant to at least a V-2 rating in the UL Subject 94 flame retardancy test.

**27.** The composition according to Claim 26 wherein component (b) is present in at least about 20 percent by weight, based upon 100 parts by weight of (a) and (b).

**28.** The composition according to Claim 26, further comprising:

(c) a reinforcing filler in an amount sufficient to reinforce the combination of (a) and (b).

**29.** The composition according to Claim 28 wherein component (c) is present in an amount of at least about 30 parts by weight, based upon 100 parts by weight of (a), (b) and (c).

European Patent Office

# EUROPEAN SEARCH REPORT

Application Number

**EP 90 12 3278**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | WO-A-8 705 304 (THE GENERAL ELECTRIC COMPANY) * claims ; page 15, line 14 - page 16, line 4 ; comparison example 14 * | 1-29 | C 08 K 5/00<br>C 08 L 71/12<br>C 08 L 77/00 //<br>(C 08 K<br>5/00<br>C 08 K<br>C 08 K 5:09<br>C 08 K 5:49 )<br>(C 08<br>L 71/12<br>C 08 L<br>C 08 L 77:00 )<br>(C 08 L 77/00<br>C<br>08 L<br>C 08 L 71:12 ) |
| A | EP-A-0 129 825 (GENERAL ELECTRIC COMPANY) | | |

TECHNICAL FIELDS SEARCHED (Int. Cl.5)

C 08 K
C 08 L

The present search report has been drawn up for all claims

| Place of search | Date of completion of search | Examiner |
|---|---|---|
| The Hague | 15 April 91 | DE LOS ARCOS Y VELAZ |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document